# EUROPEAN PATENT SPECIFICATION

(11) **EP 4 316 749 B1**
(45) Date of publication and mention of the grant of the patent: **10.09.2025**
(21) Application number: 22188374.7
(22) Date of filing: 02.08.2022
(51) Int. Cl.: B25J 15/00, B25J 15/12, B25J 19/00, B25J 15/08

(54) **ROBOTIC GRIPPER**
ROBOTERGREIFER
PRÉHENSEUR ROBOTIQUE

(43) Date of publication of application: 07.02.2024
(73) Proprietor: Helmut-Schmidt-Universität, Universität der Bundeswehr Hamburg, 22043 Hamburg (DE)
(72) Inventor: Bruns, Rainer, 22043 Hamburg (DE); Klitsch, Christopher, 22043 Hamburg (DE)
(74) Representative: RGTH

(56) References cited:
- US-A- 3 981 528
- US-A1- 2014 008 931
- US-B2- 10 875 196

## Description

The invention relates to a robotic gripper comprising a base and at least one flexible finger and a support structure, wherein the at least one flexible finger is connected to the base, wherein the at least one flexible finger is configured for performing at least a bi-directional movement for gripping and releasing an object.

### Technical Background

In the logistics and production environment, activities performed by humans are increasingly being automated by the use of robots. Here, the end effector is a key element. The end effector can be a tool, gripper or inspection device. Especially in handling tasks, i.e. in the movement and placement of objects, the end effector, namely the gripper, has to perform a variety of tasks. The phases of "gripping" are the same for humans and for robots:
(a) detection of the object, (b) movement of the gripper/hand toward the object, (c) positioning of the gripper/hand relative to the object, d) gripping, e) holding and moving the object, g) releasing. Grippers and gripping principles have been specially developed and adapted in various designs for a wide range of tasks.

Since any automation, especially in the areas of gripping and handling, usually implies a restriction compared to the given flexibility through activities performed by human hands, a conflict of objectives arises between the desire for automation and the desire for flexibility. For this reason, this conflict of goals is countered in the area of automated gripping by grippers that are as universal as possible.

One special design - which pursues the goal of gripping as universally as possible while at the same time protecting the object - involves fluidic elastomer grippers with so-called elastic flexible fingers. Bellows are used as actuators for the elastic flexible fingers. These consist of an elastic sheath and a pressure chamber enclosed by the sheath. The special shape of the sheath and, if necessary, the combination of elastic and rigid areas, can be used to define an intended rotational deformation that occurs when the pressure of the fluid in the pressure chamber is increased. When the internal pressure is reduced again to atmospheric pressure the bellows return to their original shape due to the elasticity of the material. By generating negative pressure in the pressure chamber, the direction of motion can be reversed in most designs of bellows actuators. These capabilities are used to control movements of the elastic flexible fingers for gripping.

Fluidic elastomer grippers adapt very well to the surfaces of the objects to be gripped due to their high elasticity, even with a large variation in the size and shape of the objects. In the process, the objects are gripped securely and very gently. During gripping, the contact force is not only applied selectively, but also over as large an area as possible due to the adaptive capabilities of the fluidic elastomer grippers. Due to the absence of mechanical joints and the required lubricants, fluidic elastomer grippers can be used for food contact. This technology is therefore very often used in the field of food handling and when sensitive objects and surfaces are to be gripped automatically.

Due to the elasticity of the grippers, the demands on the overall automation system with regard to the positioning accuracy of the robot are less than with conventional grippers. Deviations from the optimum relative position of the gripper to the object are compensated for by the flexibility of the elastic flexible fingers.

At the same time, the very advantageous property of elasticity also results in some significant disadvantages. If external forces act on the flexible finger during the gripping phase, they lead to undesirable deformation of the finger and the gripping action cannot be performed optimally. In the holding and moving phase, rapid movements with high accelerations are only possible to a limited extent due to the effect of the mass inertia forces and moments generated by the gripped object, resulting in the elastic flexible fingers deforming. The flexing of the finger is yielding and the finger can twist due to the low torsional stiffness of the bellows. In these cases, the grip is not secure and the gripper can lose the object. This limits the possible applications in production and logistics processes, because speed is crucial in many applications, especially in the field of automated food packaging.

DE 10 2016 125 271 A1 discloses a modular actuator system, in particular a modular building block system, with which complex multi-actuator systems or actuator devices and multi-actuator devices can be quickly and easily constructed, which can be used as grippers, handling devices for locomotion or for applications from robotics. The modular actuator system compresses at least one fluid actuator and at least one coupling device, wherein the at least one fluid actuator and the at least one coupling device are connectable to form an actuator device, wherein the at least one fluid actuator comprises a connection element, wherein the at least one coupling device, comprises a connection complement, characterized in that the connection element and the connection complement define a system-uniform mechanical and/or fluidic interface, so that actuator devices with different geometries can be formed.

DE 10 2014 106 929 A1 discloses an actuator element having a base body which is elastic at least in regions and has an interior to which pressure can be applied, a first flexible support surface and at least one second flexible support surface, which are each arranged on the base body, and an elastically formed guide joint, which is formed between the first flexible supporting surface and the second flexible supporting surface, the first flexible supporting surface and the second flexible supporting surface being movable relative to one another about an axis of rotation formed by the guide joint when pressure is applied to the interior of the base body.

WO 2017/127643 A1 discloses soft robotic gripper systems suited to grasping target objects in cluttered environments. Some embodiments provide extension rods, hinges, and/or rails that allow a soft robotic actuator to be extended towards or away from a robotic base and/or other actuators. Accordingly, a gripper including the actuator may be reconfigured into a size and/or shape that allows for improved access to the cluttered environment.

US 3,981,528 A discloses a robot finger comprising a substantially enclosed, hollow elongated body, which body has integral therewith and running lengthwise exteriorly thereof a gripping pad, said hollow body being deformable by fluid pressure in the direction of said gripping pad, said gripping pad being nondeformable in the direction of said body by said fluid pressure, said elongated body having a fluid injection inlet in a wall thereof.

US 2014/0 008 931 A1 relates to an under-actuated robotic finger with joint locking mechanisms, including: a base body; a first finger part coupled rotatably to the base body; a second finger part coupled rotatably to the first finger part; a first hinge part adapted to rotatably connect the base body and the first finger part; a second hinge part adapted to rotatably connect the first finger part and the second finger part; a first locking mechanism adapted to restrict the rotation of the first finger part; and a second locking mechanism adapted to restrict the rotation of the second finger part.

### Description of the invention: problem, solution and advantages

It is an object of the present invention to provide a robotic gripper with at least one flexible finger that restricts undesired movements or deformations of the flexible finger, for example while gripping, holding and/or moving an object, without hindering or restricting the desired, necessary deformations.

The object is solved by a robotic gripper comprising a base and at least one flexible finger and a support structure, wherein the at least one flexible finger is connected to the base, wherein the at least one flexible finger is configured for performing at least a bi-directional movement for gripping and releasing an object, wherein the support structure comprises at least one switchable mobility limiting mechanism configured for at least partially restricting the bi-directional movement of the at least one flexible finger in a first direction.

Preferably, the robotic gripper comprises at least two flexible fingers. In that way the object can be gripped between the at least two flexible fingers. The base is preferably fixed to a gantry robot or articulated robot or a similar mechanism so that the robotic gripper can be placed above an object to be gripped. Preferably, the material of the at least one flexible finger comprises a silicone or a rubber-like material.

According to the invention, the at least one flexible finger is a pneumatic finger or a hydraulic finger and the at least one finger comprises a bellows, wherein the bellows comprises a fluid chamber. The at least one flexible finger may comprise an elastic sheath and a fluid chamber enclosed by the sheath.

According to the invention, the at least one flexible finger is a pneumatic or a hydraulic finger and the bending of the at least one flexible finger is realized by applying pressure to the bellows of the finger, particularly by increasing an internal pressure in the finger. The bellows preferably has preformed folds. When the internal pressure of the finger is increased these folds are stretched and the finger bends. The fluid chamber preferably holds the respectable fluid through which the pressure is applied and is therefore arranged inside the finger. Preferably, the fluid used to operate the at least one flexible finger is air.

The at least one flexible finger, preferably the at least two fingers, is/are first bent outwards in the first direction when preparing to grip the object. Then the base is moved over the object, or the object is moved under the base. The at least one, preferably the at least two flexible fingers is/are then bent in the opposite second direction of the bi-directional movement until the object is gripped. Preferably, the outward bending is caused by applying negative pressure to the bellows of the finger.

Preferably during the gripping of the object by the at least one finger, the movement in the first direction is mostly restricted, more preferably the movement in the first direction is completely restricted, further preferably the restriction is exerted by the at least one switchable mobility limiting mechanism. The expression "gripping" may encompass the whole bending movement of the finger towards the object and also the state in which the finger is in contact with the object. This makes sure that when the object is gripped that the fingers cannot be bent outwards in the first direction so that the object can slip and/or fall. When the object is moved to its desired location the robotic gripper can perform a releasing action. The first direction is a releasing direction.

According to the invention the at least one switchable mobility limiting mechanism is configured for not restricting the bi-directional movement of the at least one flexible finger in a second direction, wherein the second direction is a gripping direction.

The bending of the finger is necessary to grip the object and can also be described as a bending of the finger around a z-axis, wherein preferably the movement takes place in the corresponding xy-plane. The movement is therefore bi-directional and both directions are essential for the gripping and releasing of the object. Here, the second direction is the gripping direction and means that the finger is bent towards the object and the first direction is the releasing direction wherein the finger is bent away from the object. However, for the function of the gripper and in particular for safety when holding and moving the object, it is important that bending of the finger in the first direction is avoided when moving the object, because this could cause the object to slip out of the robotic gripper and thus not ensure a reliable gripping process.

According to the invention, the at least one switchable mobility limiting mechanism is switchable between an activated state, in which the at least one switchable mobility limiting mechanism at least partially restricts the movement of the at least one flexible finger in the first direction, and a deactivated state, in which the at least one switchable mobility limiting mechanism does not restrict the movement of the at least one flexible finger in the first direction.

The robotic gripper uses the at least one switchable mobility limiting mechanism to control the different operating states. During the activated state of the switchable mobility limiting mechanism the support structure is stiffened and thereby restricts the movement of the finger in the first direction, but still enables all movements that are necessary to grip the object. When the object needs to be released there is no restriction necessary, therefore the at least one switchable mobility limiting mechanism enters a deactivated state and the object can be released by bending the finger in the first direction, which is the releasing direction.

Preferably, the at least one switchable mobility limiting mechanism comprises at least one switchable coupling element, wherein the at least one switchable coupling element more preferably is a switchable clutch or a switchable braking mechanism. The support structure needs the necessary mobility during gripping and releasing of the object in order to impede the deformations of the flexible finger required in these operating states as little as possible. The coupling element therefore in the deactivated state preferably allows relative movements of the support structure in the first and second directions, and thus

in the releasing and in the gripping direction. In the activated state, the switchable coupling element still allows for an unimpeded movement in the second or gripping direction, while it at least partially restricts movement in the first or releasing direction in the activated state of the switchable mobility limiting mechanism. Preferably, frictionally engaged and formfitting clutches and/or brakes can be used.

Preferably the support structure comprises at least two, more preferably rigid, support elements swivelably connected by the at least one switchable coupling element, wherein a first support element of the at least two support elements is directly or indirectly rigidly connected to the base and wherein a second support element of the at least two support elements is directly or indirectly, preferably rigidly, connected to or in a preferably essentially form fitting contact with a tip section of the at least one flexible finger.

The support elements may be configured to transmit the forces that are acting on the at least one flexible finger to the base of the robotic gripper with as little elastic deformation as possible.

In the case of an indirect rigid connection to the base the base may comprise a fluid inlet element for guiding a fluid into the fluid chamber of the at least one finger. The first support element may be rigidly connected to the fluid inlet element. The rigid connection can mean that the connection is integrally formed for example by welding.

The second support element can be connected, for example materially uniform, preferably via a connecting element as described below with the tip section of the finger. The second support element may also be in a form fitting contact with the tip section of the finger, more preferably the second support element consists of a rigid material and the tip section of the finger consists of a highly flexible material. In this case, the form of the second support element or of a part of the second support element may fit the form of the tip section of the at least one flexible finger. It may be preferred that the second support element is disposed inside the fluid chamber of the finger. The second support element or a part of the second support element may be disposed inside the fluid chamber in the tip section of the finger and be formed complementary to the tip section part of the fluid finger. A small gap may be provided between the tip section of the at least one flexible finger and the second support element or part of the second support element.

Preferably, the at least two support elements can be connected by a second switchable coupling element, where the second switchable coupling element more preferably enables the rotation of the second support element around its own axis.

The advantage is that more degrees of freedom of the robotic gripper can the controlled separately. Also, more complex movements are made possible in this case.

Preferably the first support element is configured hollow, and/or cylindrical, and/or conical and/or rod-shaped. Also preferably, the second support element is configured hollow, and/or cylindrical, and/or conical and/or rod-shaped.

The support elements must have sufficient strength and they should be as light as possible. They should therefore be made of a material with high strength and low mass density. These additionally have the advantage that they possess a both high bending stiffnesses and a high torsional stiffness.

Preferably, the first support element is a hollow rod.

According to the invention, the at least one switchable mobility limiting mechanism comprises a switching actuator for switching the at least one switchable mobility limiting mechanism between the activated state and the deactivated state.

To realize the switching function of the switching mobility limiting mechanism, it comprises a switching actuator. The switching actuator is only used to switch the mobility of the switchable coupling element on or off and not to move or deform the at least one flexible finger or to generate the contact force required for gripping. It therefore requires only a small amount of power and can be very small.

According to the invention, the switching actuator is a pneumatic and/or hydraulic actuator.

By changing an input variable, the switching actuator preferably generates a displacement and a positioning force or a positioning angle and a positioning torque with which the at least one switchable mobility limiting mechanism, preferably the switchable coupling element is switched between the activated state and the deactivated state. The input variable of the switching actuator is thereby preferably indirectly or directly depending on the state of the gripper. In the direct control of the switching actuator, the pressure of the fluid in the fluid chamber of the at least one flexible finger is used to move a pneumatic or hydraulic actuator. This type of control of the switching actuator is particularly advantageous because the technical effort required for this is low and because the direct coupling between the drive of the at least one flexible finger and the switching of the at least one switchable mobility limiting mechanism ensures a high level of operational reliability. In the case of the preferably indirect control of the switching actuator, on the other hand, the input variable is generated with the aid of an additional power unit (power electronics, compressed air supply, pump or similar) and controlled by a gripper control unit. The gripper control controls the movements of the at least one flexible finger or in other words the gripping, holding, and releasing of the object by regulating the pressure in the at least one flexible finger. Additionally, the gripper control can give input about the current and/or future state of the at least one flexible finger to an electronic control which may be necessary to activate the switching actuator. Preferably, the electronic control and the gripper control are arranged in the same unit.

Preferably, the support structure is arranged on an outer side of the at least one flexible finger.

In other words, the support structure is comparable to a framework or an outer skeleton. In this arrangement, the support structure can be made larger and thus more load-bearing and stiffer. This arrangement is therefore favorable for gripping and handling heavy objects.

Preferably, the support structure is arranged integrated in a sheath of the at least one flexible finger.

Further preferably, the at least one flexible finger comprises a fluid chamber, wherein the support structure is arranged within the fluid chamber.

By arranging the support structure inside the fluid chamber the construction of the at least one finger is more compact. The support structure restricts the first direction of the bi-directional movement and at the same time the at least one flexible finger can bend by applying pressure to the fluid chamber of the at least one finger. Furthermore, the switching actuator may be operated by the pressure in the fluid chamber as well, thus combining two aspects of the robotic gripper. In that way also no external framework is necessary. This is advantageous when the robotic gripper needs to be small for example when lifting small light objects. Another advantage is that requirements for the hygiene of the gripper can be met easily and safely for applications of the robotic gripper in the food and pharmaceutical industries, in medical technology, and in the care and health sectors. Hygiene requirements can be easily met because the support structure is inside the at least one flexible finger and thus cannot cause contamination on a surface of the at least one flexible finger. In addition, the at least one flexible finger can be cleaned without regard to the support structure.

According to the invention, the switching actuator is arranged inside the fluid chamber, preferably inside the first support element or inside the second support element.

According to the invention, the switching actuator is a pneumatic and/or hydraulic actuator comprising a pressure-deformable element, more preferably a pressure-deformable cell.

With the pneumatic and/or hydraulic actuator the pressure that is necessary to bend the at least one flexible finger can also be used to operate the switching actuator.

Preferably, the switching actuator comprises a lever mechanism connected, via a connecting section of the pressure deformable element, to the pressure-deformable element and the switchable coupling element.

Preferably, the lever mechanism is configured to transfer a movement of the connecting section caused by a deformation of the pressure-deformable element to the switchable coupling element to switch the switchable mobility limiting mechanism, more preferably the switchable coupling element, between the activated state and the deactivated state.

When the pressure inside the fluid chamber of the flexible finger is increased, the pressure is also applied to the pressure deformable element, which thus gets compressed. The lever mechanism is connected with the connecting section of the pressure deformable element, which moves due to the pressure dependent deformation of the pressure deformable element. Through this movement a lever of the lever mechanism is moved. Through the movement of the lever the switchable mobility limiting mechanism, in particular the switchable coupling element, is switched from the deactivated state to the activated state. In this way the pressure that is applied does not only bend the at least one flexible finger in the second direction, but at the same time also restricts the bending of the at least one flexible finger in the first direction of the bi-directional movement. Thus, making an additional parameter for the activation and/or deactivation of the switching actuator obsolete.

Preferably, the switchable coupling element is a freewheel clutch and/or a wrap spring clutch.

A conventional coupling must be switched precisely at the transition from the gripping of the object to a holding of the object to make sure, that the movement in the first direction is no longer possible. In this context it can be difficult to determine the moment when the restriction needs apply. With a switchable freewheel clutch, on the other hand, it is sufficient if the freewheel clutch is switched on at some point during the gripping of the object. This is because a freewheel clutch allows relative movement between the components connected by it in one direction only, namely in the second direction. Relative movement in the other direction, namely the first direction, on the other hand, is blocked by the freewheel clutch. Since the freewheel clutch locks the first direction of movement, an unintentional bending of the at least one flexible finger as a result of operating forces is restricted by the support structure. However, the support structure preferably allows the fingers to spread intentionally in the first direction when the object is released. Therefore, the freewheel clutch preferably can be switched off, i.e. switched into the deactivated state.

Preferably, the support structure comprises a connecting element connecting the second support element to the tip section of the at least one flexible finger, wherein the connecting element is configured for allowing a limited lateral movement of the at least one flexible finger and/or a limited torsional movement of the at least one flexible finger.

Preferably, the lateral movement is considered lateral in relation to the bi-directional movement. The lateral movement can therefore be a bending of the at least one flexible finger around the x-axis. Preferably, the torsional movement is a twisting movement around the y-axis and/or the finger axis. These movements allow the at least one flexible finger to adapt to the contour of an object surface, resulting in more favorable force transmission between the object to be gripped and the finger. However, the lateral and torsional movements are only allowed within certain limits, because large lateral movements and large torsional movements of the at least one flexible finger could lead to instable gripping of the object and therefore making the gripping unreliable. Preferably, the degree of unrestricted lateral movement and torsional movement depends on the surface of the object. A squared object preferably needs a more restricted lateral movement and torsional movement than a spherical object.

The connecting element can be fixedly connected to the tip section of the at least one flexible finger. Alternatively, the connecting element may only abut to the tip section of the at least one flexible finger. For example, the connecting element may be disposed inside the fluid chamber in the tip section of the finger and be in a preferably essentially form fitting contact with the tip section of the at least one flexible finger, while a small gap remains between the connecting element and the inside of the tip section of the sheath of the finger. During gripping of an object the gap between the sheath of the finger and the connecting element may close so that forces can be transferred via the connecting element to the second support element of the support structure.

Preferably, the connecting element is arranged at an end of the second support element.

Further preferably, the connecting element is a, more preferably ellipsoid, further preferably spherical, body, wherein the connecting element is most preferably disposed inside the fluid chamber, particularly preferably in the tip section, of the at least one flexible finger.

The form of the body can be adjusted to certain requirements of the objects to be gripped. If a high degree of lateral movement and torsional movement is desired a spherical body can give this freedom similar to a ball and socket joint. When a more limited freedom is desired, the ellipsoid body may be used. In these cases, the body only abuts the tip section of the at least one flexible finger. If a very limited or no lateral movement or torsional movement is desired the body can be fixedly connected to the tip section of the at least one finger. Preferably, the placement of the body in relation to the tip section of the at least one flexible finger gives more control about the allowed movements.

Preferably, the body is rigid or flexible, more preferably elastic, and/or the body is fixedly connected to the at least one finger or disposed in a most preferably essentially form fitting contact with the at least one flexible finger.

Preferably, the body comprises a swivel joint or a ball joint.

Ball joints may allow a limited range of smooth movement in all directions. The ball joint may comprise a ball-shaped surface of which fits into the cup-like depression. Therefore, the ball-shaped surface of the second support element can pivot around the cup of the body.

The body can be elastic when a fixed connection, such as a material uniform connection, with the tip of the at least one flexible finger is desired while not completely limiting the lateral movement and the torsional movement. Through the elasticity of the body there is still a small degree of freedom. When the body is rigid only the physical contact of the sheath of the at least one flexible finger with the body limits the movement.

Preferably, the connecting element is a leaf spring, wherein the leaf spring is connected to the outside of the at least one flexible finger, preferably to the outside of the tip section.

In case the connecting element is a leaf spring the leaf spring limits the torsional movement of the tip section of the at least one flexible finger. This is especially advantageous when the support structured is arranged outside of the sheath of the at least one flexible finger.

Preferably, the leaf spring connects two parts of a third support element, wherein one end of a first part of the third support element is connected to the second support element by a non-switchable coupling element such as a pivot joint and one end of a second part of the third support element is connected to the tip section of the at least one flexible finger by a second swivel joint.

Preferably, the at least one switchable mobility limiting mechanism comprises at least one non switchable coupling element, wherein more preferably the non-switchable coupling element is a pivot joint.

Preferably, the supporting elements are produced in one piece in a 3D printing process so that the geometry is particularly optimized in terms of stress and stiffness.

Nowadays, such support elements can be designed using computer-aided optimization processes and manufactured economically using new manufacturing technologies such as the 3D printing process. When producing the supporting elements in this way the strength of the connections between the supporting elements and the components connected to them (the base and the coupling elements) can be improved.

A further solution to the object of the invention is provided with the support structure for a robotic gripper as described above.

A still further solution to the object of the invention is provided with at least one flexible finger for a robotic gripper as described above.

### Short description of the figures

Examples of the invention are explained in more detail below with reference to the drawings.
Fig. 1 shows in a schematic front view a robotic gripper with two flexible fingers,
Fig. 2 shows in sectional view of a flexible finger of the robotic gripper,
Fig. 3 shows a detailed schematic side view of the coupling element, and
Fig. 4 shows a schematic front view of a robotic gripper wherein the support structure is arranged outside of the at least one flexible finger.

### Detailed description of the figures

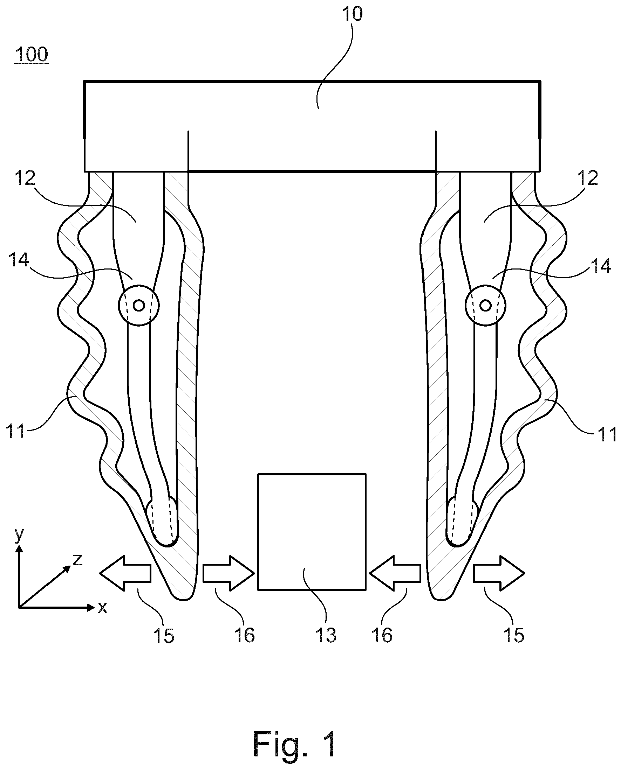

Fig. 1 shows a robotic gripper 100 in accordance with the invention. The robotic gripper 100 comprising a base 10 and at least one flexible finger 11 in this case two flexible fingers 11 and a support structure 12, wherein the at least one flexible finger 11 is connected to the base 10, wherein the at least one flexible finger 11 is configured for performing at least a bi-directional movement for gripping and releasing an object 13. The support structure 12 comprises at least one switchable mobility limiting mechanism 14 configured for at least partially restricting the bi-directional movement of the at least one flexible finger 11 in a first direction 15. Fig. 1 also shows a second direction 16.

During operation of the robotic gripper 100 the base 10 is positioned above the object 13 or the object 13 is positioned under the base 10, respectively. The two flexible fingers 11 are bent in the second direction 16 around an imaginary z-axis until they grip the object 13. At least during the gripping or also during the whole gripping movement the bending of the two fingers 11 in the first direction 15 is restricted by the switchable mobility limiting mechanism 14 so that the object 13 cannot slip or fall, especially during holding and/or moving. When the object 13 is gripped it can be lifted and moved around until it is released.

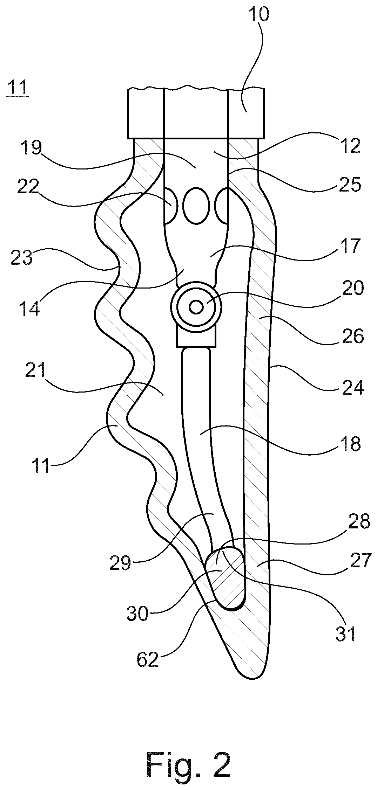

Fig. 2 shows the at least one flexible finger 11 in greater detail. The support structure 12 consists of two support elements 17, 18 wherein the first support element 17 is indirectly connected to the base 10 through a fluid inlet element 19. The first and the second support elements 17, 18 are connected through a switchable coupling element 20 of the switchable mobility limiting mechanism 14.

The flexible finger 11 is a pneumatic finger and comprises a fluid chamber 20. The fluid chamber 21 is configured to hold pressurized air. The flexible finger 11 is bent in the second direction 16 (see Fig. 1) when pressure is applied and is bent back in the first direction 15 (see Fig. 1) when the pressure is released. The pressurized air is supplied through the base 10 by a not shown supply tube of the robotic gripper 100 and enters the flexible finger 11 through the fluid inlet element 19 of the first support element 17. The first support element 17 is therefore shaped as a hollow rod. The pressurized air then enters the fluid chamber 21 through outlet openings 22. The folded side 23 of the flexible finger 11 gets straightened out, while the flat side 24 of the flexible finger 11 cannot extend any more, thus causing a bending of the flexible finger 11 in the second direction 16 (see Fig. 1).

To make a faster and easier disassembly of the robotic gripper 100 possible, the upper section 25 of the first support element 17, wherein the first support element 17 and the fluid inlet element 19 are configured as one piece, is connected to the sheath 26 of the flexible finger 11 in a pressure-sealed manner for example by gluing instead of a direct connection to the base 10.

The forces acting on the flexible finger 11 during the gripping of the object 13 are transferred through the tip section 27 of the sheath 26 of the flexible finger 11 to a connecting element 28 disposed on the lower end 29 of the second support element 18. In this case the body 30 of the connecting element 28 is formed as an Ellipsoid. The body 30 also comprises a ball joint 31.

This connecting element 28 is configured in such a way that lateral bending and twisting of the flexible finger 11 is possible within predefined limits. The body 30 is not integrated into the tip section 27 of the sheath 26 of the flexible finger 11 but arranged in a form-fitting manner with a gap 62 in relation to the tip section 27. Thus, allowing more lateral bending and twisting of the tip section 27. In other words the sheath 26 of the flexible finger 11 can move and/or shift and/or wiggle relative to the body 30 in a limited manner.

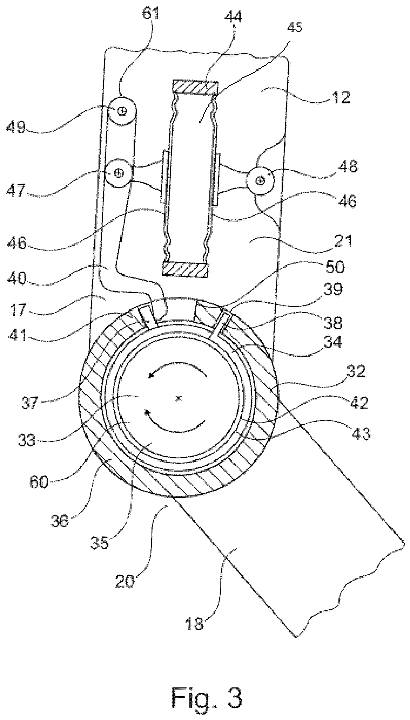

The switchable coupling element 20 is configured as a swivel-joint 32 with a freewheel clutch 33 configured as a wrap-spring clutch 60 (see Fig. 3). The swivel joint 32 connects the support elements 17, 18 in such a way that the second support element 18 can rotate relative to the first support element 17 about an axis of rotation transverse to the flexible finger 11. This allows the support structure 12 to follow the bending or deformation of the flexible finger 11 during gripping and releasing of the object 13.

Fig. 3 shows the coupling element 20 in greater detail. A freewheel clutch 33 configured as a wrap-spring clutch 60 is integrated into the swivel joint 32, consisting of a circular cylindrical inner part 35, a tubular outer part 36 and a wrap spring 34. The tubular outer part 36 is firmly connected to the first support element 17 and the circular cylindrical inner part 35 is firmly connected to the second support element 18. The wrap spring 34 is made of a strong, highly elastic material such as spring steel or plastic and is wound helically around the circular cylindrical inner part 35 with a pretension. A first end 37 and a second end 38 of the wrap spring 34 are bent outwards so that the respective ends 37, 38 can be fixed in the tubular outer part 36. The second end 38 of the wrap spring 34 is fixedly connected in a hole 39 in the tubular outer part 36. The first end 37 can assume two different positions, depending on the switching state of the wrap spring clutch 60. Firstly, the position shown in Fig. 3, in which the first end 37 of the wrap spring 34 is pressed by a lever 40 of a lever mechanism (61) to the left against a first wall 41 in the tubular outer part 36, against the direction of the wrap spring 34 winding. In this state, the wrap spring 34 is spread open so that no contact forces are transferred between the inner side 42 of the wrap spring 34 and the outer surface 43 of the circular cylindrical inner part 35. In this state, the pretension of the wrap spring 34 is relieved by its spreading. Consequently, no frictional forces are then transferred between the wrap spring 34 connected to the tubular outer part 36 and the circular cylindrical inner part 35, and the two supporting elements 17, 18 can easily rotate against each other in both directions. This is the state of the freewheel clutch 33 in which the freewheel function is deactivated.

The wrap spring clutch 60 is switched between an activated state and a deactivated state by a switching actuator 45 controlled by the internal pressure in the fluid chamber 21. An increase in pressure in the fluid chamber 21 of the flexible finger 11 causes a pressure deformable element 44 of the switching actuator 45 to deform resulting in a movement of a connecting section 46. This reduces also the distance between a first bearing point 47 attached to the lever 40 and a second bearing point 48 attached to the first support element 17, which both abut against the respectable connecting sections 46 on opposite sides. This causes the lever 40 to rotate counterclockwise around a pivot bearing 49.

The lever 40 thus releases the first end 37 of the wrap spring 34 that is pressed by the lever 40 to the left against the first wall 41. The first end 37 of the wrap spring 34 follows the movement of the lever 40 in the direction towards a second wall 50. In this state, the wrap spring 34 is pressed with its inner side 42 on the outer surface 43 of the circular cylindrical inner part 35. This initial contact force between the wrap spring 34 and the circular cylindrical inner part 35 is sufficient to transmit sufficiently large frictional forces from the circular cylindrical inner part 35 to the wrap spring 34, which press the wrap spring 34 ever more firmly onto the circular cylindrical inner part 35 when it is rotated clockwise, i.e. in the locking direction of the freewheel clutch 33. This results in self-locking, which reliably prevents relative rotation of the two supporting elements 17, 18 in this direction of rotation. This is the state of the freewheel clutch 33 in which the freewheel function is activated. When the pressure in the fluid chamber 21 of the at least one flexible finger 11 decreases, the pressure deformable element 44 returns to its initial state and the connecting section 46 therefore pushes the lever 40 of the lever mechanism 61 and causes it to rotate clockwise around the pivot bearing 49. This rotation causes the first end 37 of the wrap spring 34 to be pushed against the first wall 41 again. The tension of the wrap spring 34 to the cylindrical inner part 35 is therefore released and the freewheel function of the freewheel clutch 33 is deactivated.

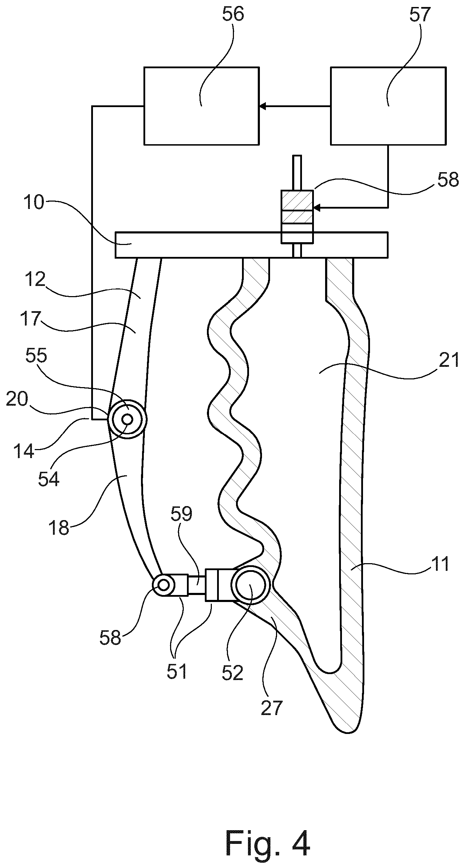

Fig. 4 shows a robotic gripper 100 with a support structure 12 being arranged outside of the at least one flexible finger 11.

The first support element 17 is connected to the base 10. And the first support element 17 is connected to the second support element 18 via the switchable coupling element 20. The second support element 18 connects to the third support element 51 by a non-switchable coupling element 53 which is configured as a simple swivel joint.

A third support element 51 is connected to the flexible finger 11 in the tip section 27 via a second swivel joint 52. This second swivel joint 52 consists of a hinge pin which is glued into a corresponding hole in the sheath 26 of the flexible finger 11 and whose ends projecting on both sides are inserted into holes in the third support element 51.

The third support element 51 is arranged horizontally with respect to the first and second support elements 17, 18. The non switchable coupling element 53 connects the second support element 18 connects the first support element 17 and the third support element 51 in such a way that the support structure 12 can follow the bending of the flexible finger 11 sufficiently.

The switchable coupling element 20 is in this case configured as a combination of a swivel joint and a form-fitting, switchable coupling, also known as a Hirth joint 54. This Hirth joint 54 consists of two ring disks which are provided with Hirth teeth on the sides facing each other. To engage the clutch, one of the two ring discs is shifted in an axial direction with the aid of an integrated electromagnetic switching actuator 55.

One of the ring discs is connected to the first support element 17 and the other ring disc is connected to the second support element 22 in a rotationally fixed manner. In the activated state, the Hirth joint 54 can transmit large torques in both directions of rotation, so that relative movement between the first support element 17 and the second support element 18 is reliably prevented. In the deactivated or open state of the Hirth joint 54 the first support element and the second support element can be easily rotated against each other in both directions of rotation and the switchable coupling element 20 then functions like a simple swivel joint.

To switch the Hirth joint 54, the electromagnetic switching actuator 55 must be toggled. This is done by switching the power supply of the electromagnetic switching actuator 55 on or off depending on the current state of the robotic gripper 100. In the de-energized state, the electromagnetic switching actuator 55 is moved to one of the two end positions of the switching actuator by means of a spring (not shown) and held there. In the energized state, the electromagnetic switching actuator 55 is moved against the spring force by an electromagnet into the other end position and held there. Wherein in the energized or activated state, the Hirth joint 54 can transmit large torques when the teeth of both ring discs grip into each other so that relative movement between the first support element 17 and second support element 18 is reliably prevented. While in the deactivated state the ring discs are disconnected from each other and an unhindered movement of first support element 17 and second support element 18 is possible.

An electronic control 56 of the electromagnetic switching actuator 55 in the Hirth joint 54 therefore only needs to be supplied with electrical energy and with the information about the current robotic gripper 100 state from a gripper control 57. The gripper control 57 controls also a control valve 58 for the fluid supply of the fluid chamber 21 and therefore controls the current state of the robotic gripper 100.

In order to allow the flexible finger 11 to bend in a limited lateral movement and a limited torsional movement, the third support element 51 is connected in its middle by a leaf spring 59 made of spring steel, which allows said lateral movement and torsional movement due to its elasticity. The relative movements between the two parts of the of the third support element 51 are limited by mechanical stops (not shown), so that the flexible finger 11 can only perform lateral movement and torsional movement within the desired limits.

### List of reference signs

- 100: robotic gripper

- 10: base
- 11: flexible finger
- 12: support structure
- 13: object
- 14: switchable mobility limiting mechanism
- 15: first direction
- 16: second direction
- 17: first support element
- 18: second support element
- 19: fluid inlet element
- 20: switchable coupling element
- 21: fluid chamber
- 22: outlet opening
- 23: folded side
- 24: flat side
- 25: upper section
- 26: sheath
- 27: tip section
- 28: connecting element
- 29: lower end
- 30: body
- 31: ball joint
- 32: swivel joint
- 33: freewheel clutch
- 34: wrap-spring
- 35: cylindrical inner part
- 36: tubular outer part
- 37: first end
- 38: second end
- 39: hole
- 40: lever
- 41: first wall
- 42: inner side
- 43: outer surface
- 44: pressure deformable element
- 45: switching actuator
- 46: connecting section
- 47: first bearing point
- 48: second bearing point
- 49: pivot bearing
- 50: second wall
- 51: third support element
- 52: second swivel joint
- 53: non switchable coupling element
- 54: Hirth joint
- 55: electromagnetic switching actuator
- 56: electronic control
- 57: gripper control
- 58: control valve
- 59: leaf spring
- 60: wrap spring clutch
- 61: lever mechanism
- 62: gap

## Claims

1. Robotic gripper (100) comprising a base (10) and at least one flexible finger (11) and a support structure (12), wherein the at least one flexible finger (11) is connected to the base (10), wherein the at least one flexible finger (11) is configured for performing at least a bi-directional movement for gripping and releasing an object (13), wherein the at least one flexible finger (11) is a pneumatic finger or a hydraulic finger, wherein the at least one flexible finger (11) comprises a bellows, wherein the bellows comprises a fluid chamber (21), **characterized in that** the support structure (12) comprises at least one switchable mobility limiting mechanism (14) configured for at least partially restricting the bi-directional movement of the at least one flexible finger (11) in a first direction (15), the first direction (15) is a releasing direction, and that the at least one switchable mobility limiting mechanism (14) is configured for not restricting the bi-directional movement of the at least one flexible finger (11) in a second direction (16), wherein the second direction (16) is a gripping direction, wherein the at least one switchable mobility limiting mechanism (14) is switchable between an activated state, in which the at least one switchable mobility limiting mechanism (14) at least partially restricts the movement of the at least one flexible finger (11) in the first direction (15), and a deactivated state, in which the at least one switchable mobility limiting mechanism (14) does not restrict the movement of the at least one flexible finger in the first direction (15), wherein the at least one switchable mobility limiting mechanism (14) comprises a switching actuator (45) for switching the at least one switchable mobility limiting mechanism (14) between the activated state and the deactivated state and wherein the switching actuator (45) is a pneumatic and/or hydraulic actuator, wherein the switching actuator (45) is arranged inside the fluid chamber (21) and comprises a pressure-deformable element (44), wherein the pressure that is necessary to bend the at least one flexible finger (11) is usable to operate the switching actuator (45).

2. Robotic gripper (100) according to any one of the preceding claims, **characterized in that** the at least one switchable mobility limiting mechanism (14) comprises at least one switchable coupling element (20), wherein the at least one switchable coupling element (20) preferably is a switchable clutch or a switchable braking mechanism.

3. Robotic gripper (100) according to claim 2, **characterized in that** the support structure (12) comprises at least two, preferably rigid, support elements (17, 18) swivelably connected by the at least one switchable coupling element (20), wherein a first support element (17) of the at least two support elements is directly or indirectly rigidly connected to the base (10) and wherein a second support element (18) of the at least two support elements (17, 18) is directly or indirectly, preferably rigidly, connected to or in a preferably essentially form fitting contact with a tip section (27) of the at least one flexible finger (11).

4. Robotic gripper (100) according to any one of the preceding claims, **characterized in that** the support structure (12) is arranged on an outer side of the at least one flexible finger (12) and/or **in that** the support structure (12) is arranged integrated in a sheath (26) of the at least one flexible finger (11).

5. Robotic gripper (100) according to any one of claims 1 to 3, **characterized in that**, wherein the support structure (12) is arranged within the fluid chamber (12).

6. Robotic gripper (100) according to claim 5, **characterized in that** the switching actuator (45) is arranged inside the fluid chamber (21), further preferably inside the first support element (17) or inside the second support element (18), and/or wherein the switching actuator (45) is a pneumatic and/or hydraulic actuator comprising a pressure-deformable element (44), preferably a pressure-deformable cell.

7. Robotic gripper (100) according to claim 6, **characterized in that** the switching actuator (45) comprises a lever mechanism (40) connected, via a connecting section (46) of the pressure deformable element (44), to the pressure-deformable element (44) and the at least one switchable coupling element (20).

8. Robotic gripper (100) according to claim 7, **characterized in that** the lever mechanism (40) is configured to transfer a movement of the connecting section (46) caused by a deformation of the pressure-deformable element (44) to the at least one switchable coupling element (20) to switch the at least one switchable mobility limiting mechanism (14), preferably the at least one switchable coupling element (20), between the activated state and the deactivated state.

9. Robotic gripper (100) according to any one of claims 2 to 8, **characterized in that** the switchable coupling element (20) is a freewheel clutch and/or a wrap spring clutch.

10. Robotic gripper (100) according to any one of claims 3 to 9, **characterized in that** the support structure (12) comprises a connecting element (28) connecting the second support element (18) to the tip section (27) of the at least one flexible finger (11), wherein the connecting element (28) is configured for allowing a limited lateral movement of the at least one flexible finger (11) and/or a limited torsional movement of the at least one flexible finger (11).

11. Robotic gripper (100) according to claim 10, **characterized in that** the connecting element (28) is a ellipsoid, preferably spherical, body (30), wherein the connecting element (28) is further preferably disposed inside the fluid chamber (21), particularly preferably in the tip section (27), of the at least one flexible finger (11).

12. Flexible finger (11) for a robotic gripper (100) according to any one of the preceding claims, wherein the flexible finger is configured to be connected to a base (10), wherein the flexible finger comprises a support structure (12), wherein the flexible finger (11) is configured for performing at least a bi-directional movement for gripping and releasing an object (13), wherein the flexible finger (11) is a pneumatic finger or a hydraulic finger, wherein the flexible finger (11) comprises a bellows, wherein the bellows comprises a fluid chamber (21) **characterized in that** the support structure (12) comprises at least one switchable mobility limiting mechanism (14), configured for at least partially restricting the bi-directional movement of the flexible finger (11) in a first direction (15), the first direction (15) is a releasing direction, and that the at least one switchable mobility limiting mechanism (14) is configured for not restricting the bi-directional movement of the flexible finger (11) in a second direction (16), wherein the second direction (16) is a gripping direction, wherein the at least one switchable mobility limiting mechanism (14) is switchable between an activated state, in which the at least one switchable mobility limiting mechanism (14) at least partially restricts the movement of the at least one flexible finger (11) in the first direction (15), and a deactivated state, in which the at least one switchable mobility limiting mechanism (14) does not restrict the movement of the flexible finger in the first direction (15), wherein the at least one switchable mobility limiting mechanism (14) comprises a switching actuator (45), for switching the at least one switchable mobility limiting mechanism (14) between the activated state and the deactivated state and wherein the switching actuator (45) is a pneumatic and/or hydraulic actuator, wherein the switching actuator (45) is arranged inside the fluid chamber (21) and comprises a pressure-deformable element (44), wherein the pressure that is necessary to bend the flexible finger (11) is usable to operate the switching actuator (45).

## Patentansprüche

1. Robotergreifer (100) umfassend eine Basis (10) und mindestens einen flexiblen Finger (11) und eine Tragstruktur (12), wobei der mindestens eine flexible Finger (11) mit der Basis (10) verbunden ist, wobei der mindestens eine flexible Finger (11) so konfiguriert ist, dass er mindestens eine bidirektionale Bewegung zum Greifen und Loslassen eines Objekts (13) ausführt, wobei der mindestens eine flexible Finger (11) ein pneumatischer Finger oder ein hydraulischer Finger ist, wobei der mindestens eine flexible Finger (11) einen Balg umfasst, wobei der Balg eine Fluidkammer (21) umfasst, **dadurch gekennzeichnet, dass** die Tragstruktur (12) mindestens einen schaltbaren Beweglichkeitsbegrenzungsmechanismus (14) umfasst, der so konfiguriert ist, dass er die bidirektionale Bewegung des mindestens einen flexiblen Fingers (11) in einer ersten Richtung (15) zumindest teilweise begrenzt, die erste Richtung (15) eine Freigaberichtung ist, und dass der mindestens eine schaltbare Beweglichkeitsbegrenzungsmechanismus (14) so konfiguriert ist, dass er die bidirektionale Bewegung des mindestens einen flexiblen Fingers (11) in einer zweiten Richtung (16) nicht begrenzt, wobei die zweite Richtung (16) eine Greifrichtung ist, wobei der mindestens eine schaltbare Beweglichkeitsbegrenzungsmechanismus (14) zwischen einem aktivierten Zustand, in dem der mindestens eine schaltbare Beweglichkeitsbegrenzungsmechanismus (14) die Bewegung des mindestens einen flexiblen Fingers (11) in der ersten Richtung (15) zumindest teilweise begrenzt, und einem deaktivierten Zustand, in dem der mindestens eine schaltbare Beweglichkeitsbegrenzungsmechanismus (14) die Bewegung des mindestens einen flexiblen Fingers in der ersten Richtung (15) nicht begrenzt, wobei der mindestens eine schaltbare Beweglichkeitsbegrenzungsmechanismus (14) einen Umschaltaktuator (45) zum Umschalten des mindestens einen schaltbaren Beweglichkeitsbegrenzungsmechanismus (14) zwischen dem aktivierten Zustand und dem deaktivierten Zustand umfasst, und wobei der Umschaltaktuator (45) ein pneumatischer und/oder hydraulischer Aktuator ist, wobei der Umschaltaktuator (45) innerhalb der Fluidkammer (21) angeordnet ist und ein druckverformbares Element (44) umfasst, wobei der Druck, der zum Biegen des mindestens einen flexiblen Fingers (11) erforderlich ist, zum Betätigen des Umschaltaktuators (45) verwendbar ist.

2. Robotergreifer (100) gemäß einem der vorstehenden Ansprüche, **dadurch gekennzeichnet, dass** der mindestens eine schaltbare Beweglichkeitsbegrenzungsmechanismus (14) mindestens ein schaltbares Kupplungselement (20) umfasst, wobei das mindestens eine schaltbare Kupplungselement (20) vorzugsweise eine schaltbare Kupplung oder ein schaltbarer Bremsmechanismus ist.

3. Robotergreifer (100) gemäß Anspruch 2, **dadurch gekennzeichnet, dass** die Tragstruktur (12) mindestens zwei, vorzugsweise starre, Tragelemente (17, 18) umfasst, die durch das mindestens eine schaltbare Kupplungselement (20) schwenkbar verbunden sind, wobei ein erstes Tragelement (17) der mindestens zwei Tragelemente direkt oder indirekt starr mit der Basis (10) verbunden ist, und wobei ein zweites Tragelement (18) der mindestens zwei Tragelemente (17, 18) direkt oder indirekt, vorzugsweise starr, mit einem Spitzenabschnitt (27) des mindestens einen flexiblen Fingers (11) verbunden ist oder in einem vorzugsweise im Wesentlichen formschlüssigen Kontakt mit diesem steht.

4. Robotergreifer (100) gemäß einem der vorstehenden Ansprüche, **dadurch gekennzeichnet, dass** die Tragstruktur (12) an einer Außenseite des mindestens einen flexiblen Fingers angeordnet ist, und/oder dass die Tragstruktur (12) in einer Hülle (26) des mindestens einen flexiblen Fingers (11) integriert angeordnet ist.

5. Robotergreifer (100) gemäß einem der Ansprüche 1 bis 3, **dadurch gekennzeichnet, dass** die Tragstruktur (12) innerhalb der Fluidkammer (21) angeordnet ist.

6. Robotergreifer (100) gemäß Anspruch 5, **dadurch gekennzeichnet, dass** der Umschaltaktuator (45) innerhalb der Fluidkammer (21) angeordnet ist, ferner vorzugsweise innerhalb des ersten Tragelements (17) oder innerhalb des zweiten Tragelements (18), und/oder wobei der Umschaltaktuator (45) ein pneumatischer und/oder hydraulischer Aktuator ist, der ein druckverformbares Element (44), vorzugsweise eine druckverformbare Zelle, umfasst.

7. Robotergreifer (100) gemäß Anspruch 6, **dadurch gekennzeichnet, dass** der Umschaltaktuator (45) einen Hebelmechanismus (40) umfasst, der über einen Verbindungsabschnitt (46) des druckverformbaren Elements (44) mit dem druckverformbaren Element (44) und dem mindestens einen schaltbaren Kupplungselement (20) verbunden ist.

8. Robotergreifer (100) gemäß Anspruch 7, **dadurch gekennzeichnet, dass** der Hebelmechanismus (40) so konfiguriert ist, dass er eine durch eine Verformung des druckverformbaren Elements (44) verursachte Bewegung des Verbindungsabschnitts (46) zu dem mindestens einen schaltbaren Kupplungselement (20) überträgt, um den mindestens einen schaltbaren Beweglichkeitsbegrenzungsmechanismus (14), vorzugsweise das mindestens eine schaltbare Kupplungselement (20), zwischen dem aktivierten Zustand und dem deaktivierten Zustand umzuschalten.

9. Robotergreifer (100) gemäß einem der Ansprüche 2 bis 8, **dadurch gekennzeichnet, dass** das schaltbare Kupplungselement (20) eine Freilaufkupplung und/oder eine Wickelfederkupplung ist.

10. Robotergreifer (100) gemäß einem der Ansprüche 3 bis 9, **dadurch gekennzeichnet, dass** die Tragstruktur (12) ein Verbindungselement (28) umfasst, das das zweite Tragelement (18) mit dem Spitzenabschnitt (27) des mindestens einen flexiblen Fingers (11) verbindet, wobei das Verbindungselement (28) so konfiguriert ist, dass es eine begrenzte seitliche Bewegung des mindestens einen flexiblen Fingers (11) und/oder eine begrenzte Torsionsbewegung des mindestens einen flexiblen Fingers (11) zulässt.

11. Robotergreifer (100) gemäß Anspruch 10, **dadurch gekennzeichnet, dass** das Verbindungselement (28) ein ellipsoider, vorzugsweise kugelförmiger, Körper (30) ist, wobei das Verbindungselement (28) ferner vorzugsweise innerhalb der Fluidkammer (21), insbesondere vorzugsweise im Spitzenabschnitt (27), des mindestens einen flexiblen Fingers (11) angeordnet ist.

12. Flexibler Finger (11) für einen Robotergreifer (100) gemäß einem der vorstehenden Ansprüche, wobei der flexible Finger so konfiguriert ist, dass er mit einer Basis (10) verbunden werden kann, wobei der flexible Finger eine Tragstruktur (12) umfasst, wobei der flexible Finger (11) so konfiguriert ist, dass er mindestens eine bidirektionale Bewegung zum Greifen und Loslassen eines Objekts (13) ausführt, wobei der flexible Finger (11) ein pneumatischer Finger oder ein hydraulischer Finger ist, wobei der flexible Finger (11) einen Balg umfasst, wobei der Balg eine Fluidkammer (21) umfasst, **dadurch gekennzeichnet, dass** die Tragstruktur (12) mindestens einen schaltbaren Beweglichkeitsbegrenzungsmechanismus (14) umfasst, der so konfiguriert ist, dass er die bidirektionale Bewegung des flexiblen Fingers (11) in einer ersten Richtung (15) zumindest teilweise beschränkt, wobei die erste Richtung (15) eine Loslassrichtung ist, und dass der mindestens eine schaltbare Beweglichkeitsbegrenzungsmechanismus (14) so konfiguriert ist, dass er die bidirektionale Bewegung des flexiblen Fingers (11) in einer zweiten Richtung (16) nicht begrenzt, wobei die zweite Richtung (16) eine Greifrichtung ist, wobei der mindestens eine schaltbare Beweglichkeitsbegrenzungsmechanismus (14) zwischen einem aktivierten Zustand, in dem der mindestens eine schaltbare Beweglichkeitsbegrenzungsmechanismus (14) die Bewegung des mindestens einen flexiblen Fingers (11) in der ersten Richtung (15) zumindest teilweise begrenzt, und einem deaktivierten Zustand, in dem der mindestens eine schaltbare Beweglichkeitsbegrenzungsmechanismus (14) die Bewegung des flexiblen Fingers in der ersten Richtung (15) nicht begrenzt, umschaltbar ist, wobei der mindestens eine schaltbare Beweglichkeitsbegrenzungsmechanismus (14) einen Umschaltaktuator (45) umfasst, um den mindestens einen schaltbaren Beweglichkeitsbegrenzungsmechanismus (14) zwischen dem aktivierten Zustand und dem deaktivierten Zustand umzuschalten, und wobei der Umschaltaktuator (45) ein pneumatischer und/oder hydraulischer Aktuator ist, wobei der Umschaltaktuator (45) innerhalb der Fluidkammer (21) angeordnet ist und ein druckverformbares Element (44) umfasst, wobei der Druck, der zum Biegen des flexiblen Fingers (11) erforderlich ist, zum Betätigen des Schaltaktuators (45) verwendbar ist.

## Revendications

1. Pince robotique (100) comprenant une base (10) et au moins un doigt flexible (11) et une structure de support (12), dans laquelle l'au moins un doigt flexible (11) est relié à la base (10), dans laquelle l'au moins un doigt flexible (11) est configuré pour effectuer au moins un mouvement bidirectionnel pour saisir et libérer un objet (13), dans laquelle l'au moins un doigt flexible (11) est un doigt pneumatique ou un doigt hydraulique, dans laquelle l'au moins un doigt flexible (11) comprend un soufflet, dans laquelle le soufflet comprend une chambre à fluide (21), **caractérisée en ce que** la structure de support (12) comprend au moins un mécanisme de limitation de mobilité commutable (14) configuré pour restreindre au moins partiellement le mouvement bidirectionnel du au moins un doigt flexible (11) dans une première direction (15), la première direction (15) étant une direction de libération, et **en ce que** l'au moins un mécanisme de limitation de mobilité commutable (14) est configuré pour ne pas restreindre le mouvement bidirectionnel du au moins un doigt flexible (11) dans une deuxième direction (16), la deuxième direction (16) étant une direction de préhension, dans lequel l'au moins un mécanisme de limitation de mobilité commutable (14) peut être commuté entre un état activé, dans lequel l'au moins un mécanisme de limitation de mobilité commutable (14) restreigne au moins partiellement le mouvement du au moins un doigt flexible (11) dans la première direction (15), et un état désactivé, dans lequel l'au moins un mécanisme de limitation de mobilité commutable (14) ne limite pas le mouvement du au moins un doigt flexible dans la première direction (15), dans lequel l'au moins un mécanisme de limitation de mobilité commutable (14) comprend un actionneur de commutation (45) pour commuter l'au moins un mécanisme de limitation de mobilité commutable (14) entre l'état activé et l'état désactivé et dans lequel l'actionneur de commutation (45) est un actionneur pneumatique et/ou hydraulique, dans lequel l'actionneur de commutation (45) est disposé à l'intérieur de la chambre à fluide (21) et comprend un élément déformable sous pression (44), dans lequel la pression nécessaire pour plier l'au moins un doigt flexible (11) peut être utilisée pour actionner l'actionneur de commutation (45).

2. Pince robotique (100) selon l'une quelconque des revendications précédentes, **caractérisée en ce que** l'au moins un mécanisme de limitation de mobilité commutable (14) comprend au moins un élément d'accouplement commutable (20), dans lequel l'au moins un élément d'accouplement commutable (20) est de préférence un embrayage commutable ou un mécanisme de freinage commutable.

3. Pince robotique (100) selon la revendication 2, **caractérisée en ce que** la structure de support (12) comprend au moins deux éléments de support (17, 18), de préférence rigides, reliés de manière pivotante par l'au moins un élément d'accouplement commutable (20), dans laquelle un premier élément de support (17) des au moins deux éléments de support est relié de manière rigide, directement ou indirectement, à la base (10) et dans laquelle un deuxième élément de support (18) des au moins deux éléments de support (17, 18) est relié de manière rigide, directement ou indirectement, à une section d'extrémité (27) du au moins un doigt flexible (11) ou est dans un contact de préférence essentiellement par complémentarité de forme avec celle-ci.

4. Pince robotique (100) selon l'une quelconque des revendications précédentes, **caractérisée en ce que** la structure de support (12) est disposée sur un côté extérieur du au moins un doigt flexible (12) et/ou **en ce que** la structure de support (12) est disposée de manière intégrée dans une gaine (26) du au moins un doigt flexible (11).

5. Pince robotique (100) selon l'une quelconque des revendications 1 à 3, **caractérisée en ce que** la structure de support (12) est disposée à l'intérieur de la chambre à fluide (21).

6. Pince robotique (100) selon la revendication 5, **caractérisée en ce que** l'actionneur de commutation (45) est disposé à l'intérieur de la chambre à fluide (21), de préférence à l'intérieur du premier élément de support (17) ou à l'intérieur du deuxième élément de support (18), et/ou dans lequel l'actionneur de commutation (45) est un actionneur pneumatique et/ou hydraulique comprenant un élément déformable sous pression (44), de préférence une cellule déformable sous pression.

7. Pince robotique (100) selon la revendication 6, **caractérisée en ce que** l'actionneur de commutation (45) comprend un mécanisme à levier (40) relié, via une section de liaison (46) de l'élément déformable sous pression (44), à l'élément déformable sous pression (44) et au au moins un élément d'accouplement commutable (20).

8. Pince robotique (100) selon la revendication 7, **caractérisée en ce que** le mécanisme à levier (40) est configuré pour transférer un mouvement de la section de connexion (46) provoqué par une déformation de l'élément déformable sous pression (44) au au moins un élément d'accouplement commutable (20) afin de commuter l'au moins un mécanisme de limitation de mobilité commutable (14), de préférence l'au moins un élément d'accouplement commutable (20), entre l'état activé et l'état désactivé.

9. Pince robotique (100) selon l'une quelconque des revendications 2 à 8, **caractérisée en ce que** l'élément d'accouplement commutable (20) est un embrayage à roue libre et/ou un embrayage à ressort enveloppant.

10. Pince robotique (100) selon l'une quelconque des revendications 3 à 9, **caractérisée en ce que** la structure de support (12) comprend un élément de connexion (28) reliant le deuxième élément de support (18) à la section d'extrémité (27) du au moins un doigt flexible (11), l'élément de liaison (28) étant configuré pour permettre un mouvement latéral limité du au moins un doigt flexible (11) et/ou un mouvement de torsion limité du au moins un doigt flexible (11).

11. Pince robotique (100) selon la revendication 10, **caractérisée en ce que** l'élément de connexion (28) est un corps ellipsoïdal, de préférence sphérique (30), dans lequel l'élément de connexion (28) est en outre de préférence disposé à l'intérieur de la chambre à fluide (21), de manière particulièrement préférée dans la section d'extrémité (27), du au moins un doigt flexible (11) .

12. Doigt flexible (11) pour une pince robotique (100) selon l'une quelconque des revendications précédentes, dans lequel le doigt flexible est configuré pour être relié à une base (10), dans lequel le doigt flexible comprend une structure de support (12), dans lequel le doigt flexible (11) est configuré pour effectuer au moins un mouvement bidirectionnel pour saisir et libérer un objet (13), dans lequel le doigt flexible (11) est un doigt pneumatique ou un doigt hydraulique, dans lequel le doigt flexible (11) comprend un soufflet, dans lequel le soufflet comprend une chambre à fluide (21), **caractérisé en ce que** la structure de support (12) comprend au moins un mécanisme de limitation de mobilité commutable (14), configuré pour limiter au moins partiellement le mouvement bidirectionnel du doigt flexible (11) dans une première direction (15), la première direction (15) étant une direction de relâchement, et **en ce que** l'au moins un mécanisme de limitation de mobilité commutable (14) est configuré pour ne pas limiter le mouvement bidirectionnel du doigt flexible (11) dans une deuxième direction (16), la deuxième direction (16) étant une direction de préhension, dans lequel l'au moins un mécanisme de limitation de mobilité commutable (14) est commutable entre un état activé, dans lequel l'au moins un mécanisme de limitation de mobilité commutable (14) limite au moins partiellement le mouvement du au moins un doigt flexible (11) dans la première direction (15), et un état désactivé, dans lequel l'au moins un mécanisme de limitation de mobilité commutable (14) ne limite pas le mouvement du doigt flexible dans la première direction (15), dans lequel l'au moins un mécanisme de limitation de mobilité commutable (14) comprend un actionneur de commutation (45) pour commuter l'au moins un mécanisme de limitation de mobilité commutable (14) entre l'état activé et l'état désactivé, et dans lequel l'actionneur de commutation (45) est un actionneur pneumatique et/ou hydraulique, dans lequel l'actionneur de commutation (45) est disposé à l'intérieur de la chambre à fluide (21) et comprend un élément déformable sous pression (44), dans lequel la pression nécessaire pour plier le doigt flexible (11) peut être utilisée pour actionner l'actionneur de commutation (45).
